(19) Europäisches Patentamt
European Patent Office
Office européen des brevets

(11) **EP 2 518 620 A1**

(12) **EUROPEAN PATENT APPLICATION**

(43) Date of publication:
**31.10.2012 Bulletin 2012/44**

(51) Int Cl.:
**G06F 9/44** (2006.01)

(21) Application number: **12165642.5**

(22) Date of filing: **26.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.04.2011 US 201113097377**

(71) Applicant: **General Electric Company
Schenectady, NY 12345 (US)**

(72) Inventor: **Crapo, Andrew Walter
Niskayuna, NY New York 12309 (US)**

(74) Representative: **Picker, Madeline Margaret
GE International Inc.
Global Patent Operation - Europe
15 John Adam Street
London WC2N 6LU (GB)**

(54) **Methods for code generation from semantic models and rules**

(57) Computerized methods for translating semantic models and rules into procedural code are described. The methods identify variables present in triples in both the rule conclusion and premise along with properties of the triples that identify a procedural function to incorporate procedural code generated in lieu of the semantic rule. The method further determines if the premise triples comprising variables that are subjects of conclusion triples are "type" statements. Additionally, the domain of the property of the triples in the rule premise and/or conclusion that are not "type" statements but bind the subject variables are also determined. The procedural function is then associated with procedural classes translated from the intersection of semantic classes identified by the premise triples determined to be "type" statements and the classes identified as the domain of the conclusion or premise triples that comprise the subject variables but are not "type" statements. Further, the procedural function is updated in the associated procedural classes with the semantic rule computation determined using premise elements that compute values of object variables in the conclusion triples.

300

302 — Evaluate a conclusion of a semantic rule to determine information computed by the semantic rule, where conclusion elements include one or more triples

304 — Identify one or more variables in each of the triples for each of the one or more elements in the semantic rule conclusion, where the one or more variables are also present in a premise of the semantic rule

306 — Determine a property of each triple in the one or more triples for each of the one or more elements in the semantic rule conclusion for identifying a procedural function where procedural code generated in lieu of the semantic rule will be incorporated

308 — Identify one or more elements in the semantic rule premise that bind one or more subject variables in the one or more variables, where each of the subject variables is a subject of at least one of the one or more triples in the semantic rule conclusion

310 — Determine whether one or more triples in the semantic rule premise comprising the identified subject variables are "type" statements

312 — Determine the domain of the property of each of the one or more triples in the semantic rule premise and/or the sematic rule conclusion that bind the identified subject variables when one or more of the triples in the semantic rule premise comprising the identified subject variables are not "type" statements

314 — Associate the procedural function with procedural classes translated from semantic classes obtained from an intersection of classes identified by the triples determined to be "type" statements and classes identified as the domain of the triples that comprise the identified subject variables in the semantic rule premise and/or the semantic rule conclusion and are not "type" statements

316 — Determine a computation performed by the semantic rule based on one or more elements in the semantic rule premise that compute a value of one or more object variables

318 — Update the procedural function in associated procedural classes with procedural code generated in lieu of the determined computation to return the computed value

FIG. 3

**Description**

RELATED ART

The advent of the Internet and the World Wide Web (WWW) has imparted universality to the use and dissemination of a wide variety of information. Exploiting the Web to its full extent, however, entails making the available information accessible to not only humans, but also machines to allow sharing of data in a format that can be processed automatically without relying on the corresponding syntax.

To that end, the World Wide Web Consortium (W3C) has proposed the semantic web initiative that offers significant potential for knowledge capture and usage in numerous domains of interest using shared standards, tools and languages. Accordingly, the semantic technology (Web) stack includes multiple layers of technology, each of which builds on the preceding layers, additionally including a crosscutting layer of cryptography. Further, semantic technology uses semantic models or ontologies to represent knowledge by describing data in a formal logical model that transcends any particular format. Specifically, the semantic models or ontologies are formal representations of the concepts such as classes, properties, and instances of a domain of discourse.

The Web Ontology Language (OWL), for example, is a W3C recommendation for creating and sharing semantic models on the Web. Specifically, OWL provides means for ontology definition and specifies formal semantics on how to derive new information from a defined model. Once the ontology or the concepts of a domain have been captured in the formal model, a reasoner or a rules engine, typically implemented in a separate block in the semantic technology stack, can process the semantic model to make logical inferences, for example, about corresponding class membership and instance properties. In addition to making logical inferences, semantic modeling allows subject matter experts (SMEs) to write "business rules" using the concepts of the domain within the rules' premises and conclusions. To that end, the SMEs, for example, may use the Semantic Web Rule Language (SWRL), Jena Rules, or any other suitable rule language for authoring the rules that augment and depend on the defined semantic models.

While semantic models and rules are a very useful way to model real world scenarios and capture domain knowledge, these models are often developed independent of implementation concerns and are not executable by themselves. Rather, the semantic rules are declarative knowledge to be processed or interpreted by a reasoner/rules engine. Accordingly, it may be desirable for a variety of reasons including validation, execution control and performance, to transform these models into procedural code.

Generally, partial code generation by translating classes and corresponding properties and instances in the ontology into classes and corresponding fields and instances in an object-oriented language is possible and relatively straightforward. Specifically, in certain implementations, instances of the ontology classes may be translated into in-memory instances of the classes or into data within a repository such as a semantic store or a relational database. The instance data is then accessed using an application programming interface (API) to the in-memory class instances, the semantic repository or the relational database that stores the instance data.

Although, these conventional techniques provide some code generation, they often fail to translate the complex and independently implemented semantic rules into procedural code. As the semantic rules provide logical inferences and domain specific relationships corresponding to the semantic models, failing to convert these rules into procedural code results in inadequate capture of conceptual information by the generated code.

It is desirable to develop effective systems and methods for code generation from semantic models and rules. Particularly, there is a need for techniques that allow transforming the semantic models and rules into procedural code that allows ease of use of the captured information, easier system validation and improved system performance.

BRIEF DESCRIPTION

In accordance with aspects of the present technique, methods and systems for translating semantic models and rules into procedural code in a desired procedural language are presented. The method includes evaluating a semantic rule conclusion to determine information computed by the semantic rule that includes one or more triples. Further, the method identifies variables present in triples in both the rule conclusion and premise along with properties of the triples that identify a procedural function to incorporate procedural code generated in lieu of the semantic rule. The method further determines if the premise triples comprising variables that are subjects of conclusion triples are "type" statements. Additionally, the domain of the property of the triples in the rule premise and/or conclusion that are not "type" statements but bind the subject variables are also determined. The procedural function is then associated with procedural classes translated from the intersection of semantic classes identified by the premise triples determined to be "type" statements and the classes identified as the domain of the conclusion or premise triples that comprise the subject variables but are not "type" statements. Further, the procedural function is updated in the associated procedural classes with the semantic rule computation determined using premise elements that compute values of object variables in the conclusion triples. Additionally, non-transitory computer readable storage media including executable programs for generating procedural code in a desired computer programming language from semantic models and rules are also disclosed.

DRAWINGS

These and other features, aspects, and advantages of the present technique will become better understood when the following detailed description is read with reference to the accompanying drawings in which like characters represent like parts throughout the drawings, wherein:

Fig. 1 is a block diagram of an example system for generating code from semantic models and rules, in accordance with aspects of the present technique;

Fig. 2 is a flow chart illustrating an example method for generating procedural code from semantic models and rules, in accordance with aspects of the present technique; and

Fig. 3 is a flow chart illustrating an example method for generating procedural code corresponding to the semantic rules, in accordance with aspects of the present technique.

DETAILED DESCRIPTION

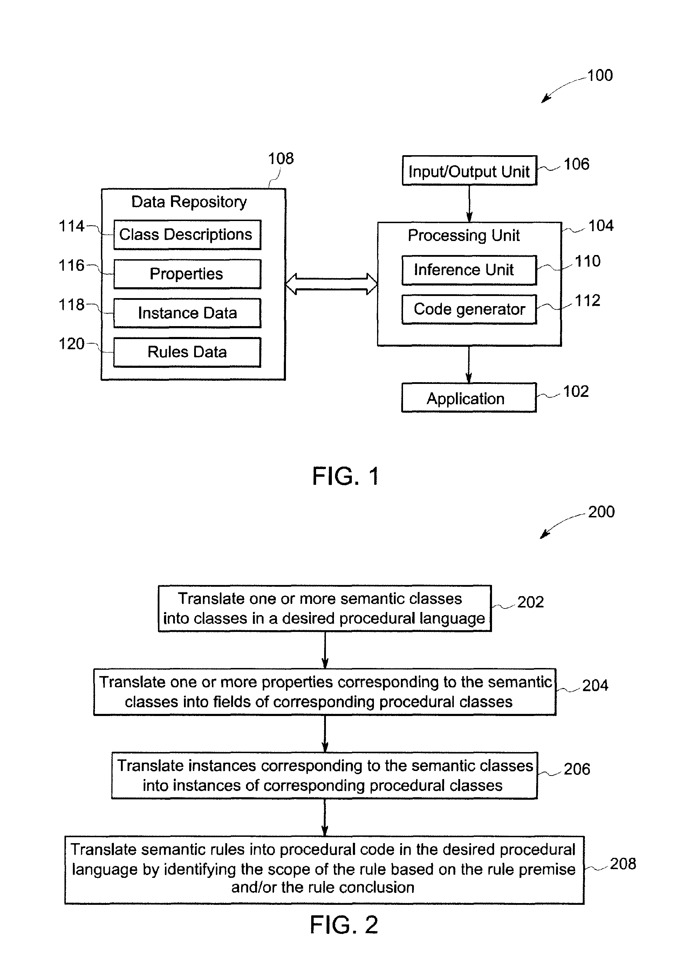

The following description presents systems and methods for generating code from semantic models and rules. Particularly, certain embodiments illustrated herein describe techniques for translating semantic rules into executable code in an object-oriented programming language by identifying the scope of the rule based on the rule premise and/or conclusion. To that end, the object-oriented programming language includes, for example, Java, C++, Smalltalk and Python. An example environment suitable for practicing various implementations of the present translation techniques is described in the following sections with reference to Fig. 1.

Fig. 1 illustrates an example code generation system 100 for translating one or more semantic models and rules into an executable application 102 in an object-oriented procedural programming language such as Java. In one embodiment, the system 100 is a general-purpose computing system that may include, for example, general-purpose processors (GPP), field programmable gate arrays (FPGA) or application specific integrated circuits (ASIC). Further, as used herein, the term "application" refers to the entire application 102 executing on the system 100 or one or more modules within the application 102 that embody at least a portion of the functionality and information described by the semantic models and rules.

Accordingly, in one embodiment, the system 100 includes a processing unit 104 for preparing and executing the application 102 based on user input and/or application requirements. To that end, the processing unit 104 includes, for example, one or more microprocessors, microcomputers, microcontrollers, dual core processors, or any other suitable processing devices. Further, in certain embodiments, the processing unit 104 is communicatively coupled to one or more input/output devices 106 and a data repository 108 over a wired and/or a wireless network (not shown) such as the Internet for generating the procedural code for the application 102 based on defined specifications or user requirements.

To that end, in one embodiment, the processing unit 104 further includes an inference unit 110 and a code generator 112 that together process the incoming data and convert the semantic model into procedural code in the application 102. Typically, the semantic models define semantic classes and corresponding properties and instances to define the concepts of domains of interest. The semantic concepts, in certain embodiments, are stored as semantic class descriptions 114, corresponding properties 116, instance data 118 and rules data 120 in the data repository 108. In one embodiment, the processing unit 104 uses Web Ontology Language (OWL) for defining semantic knowledge corresponding to general domain concepts, including class descriptions 114, properties 116 (t-box) and the instance data 118 that describe a particular situation (a-box).

Particularly, in one implementation, the semantic concepts are represented as a mathematical directed graph with the class descriptions 114 and the instance data 118 being nodes, and the properties 116 being edges of the directed graph. The mathematical directed graph representation allows fact oriented expression and exchange of information in a way that facilitates interpretation of the semantics concepts from the instance data 118 without needing to know the entire semantic meta-model. To that end, the mathematical directed graph includes "statements" or "triples" expressing facts as one or more binary relations in, for example, "Subject-Relation Type-Object" form. A particular semantic concept, for example, may be represented as a triple "Eiffel Tower <is located in> Paris."

Accordingly, in one embodiment, the inference unit 110 determines related concepts using class descriptions 114, properties 116 and rules data 120, while the code generator 112 converts the class descriptions 114, the properties 116, the instances 118 and the rules data 120 into Java code using the determined inferences. Specifically, the code generator 112 translates the class descriptions 114 that are representative of domain classes into corresponding Java classes. Additionally, the code generator 112 converts each of the properties 116 having a particular class description 114 as its domain into fields in the Java class translated from the particular domain class with corresponding get and set functions.

Further, in certain scenarios, a semantic property associated with a particular domain class may be functional, or may have cardinality or a maximum cardinality constraint limiting the property to a single instance of a range class or xsd type. In such scenarios, the get function of the field corresponding to the semantic property returns that range class or the xsd type. If the semantic property's range, however, is not as restricted, then the get function returns a collection of instances of the range class or the xsd type. Additionally, the code generator 112 translates the OWL namespaces into Java packages, thus maintaining a consistent approach to the issue of the same name appearing in multiple namespaces.

Semantic models, thus, can be translated into procedural code fairly easily. Semantic rules, however, are not directly associated with any particular concept but they use the semantic concepts, and therefore, are implemented in a separate block in the technology stack. Particularly, the complexity and the independent implementation of the semantic rules makes conversion of semantic rules into Java code difficult. Conventional API implementations of the semantic rules are often inadequate when the system 100 requires various kinds of validation and testing, and when the application 102 does not permit the use of a rules engine. Accordingly, the code generator 112 employs specific methods in accordance with aspects of the present technique for translating the semantic rules into corresponding Java code. Certain example methods that enable the code generator 112 to efficiently translate the semantic models and rules into procedural code will be described in greater detail with reference to Figs. 2-3.

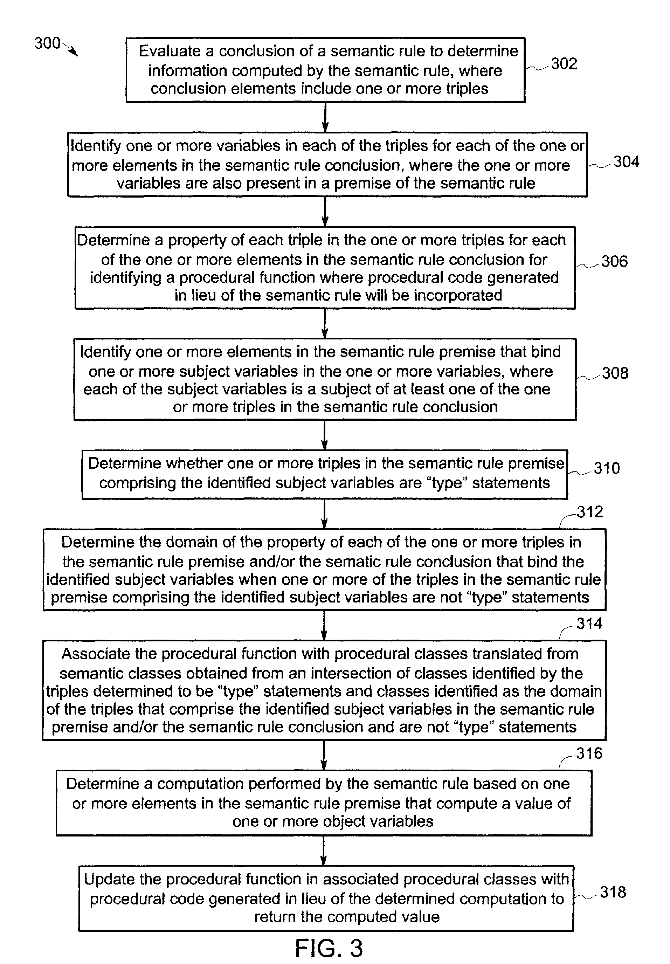

Figs. 2 and 3 illustrate flow charts 200 and 300, respectively depicting example methods for generating code from semantic models and rules. The example methods may be described in a general context of computer executable instructions on a computing system or a processor. Generally, computer executable instructions may include routines, programs, objects, components, data structures, procedures, modules, functions, and the like that perform particular functions or implement particular abstract data types. The example methods may also be practiced in a distributed computing environment where optimization functions are performed by remote processing devices that are linked through a communications network. Particularly, in the distributed computing environment, the computer executable instructions may be located in both local and remote computer storage media, including memory storage devices.

Further, in Figs. 2 and 3, the example methods are illustrated as a collection of items in logical flow charts, which represent operations that may be implemented in hardware, software, or combinations thereof. In the context of software, the blocks represent computer instructions that, when executed by one or more processing subsystems, perform the recited operations. The order in which the example methods are described is not intended to be construed as a limitation, and any number of the described blocks may be combined in any order to implement the example methods disclosed herein, or equivalent alternative methods. Additionally, certain blocks may be added or deleted from the example methods without departing from the scope of the subject matter described herein. For discussion purposes, the example methods are described with reference to the implementations of Figs. 1.

Specifically, Fig. 2 illustrates a method for translating a semantic model and corresponding rules into procedural code. For clarity, the present embodiment describes the method with reference to a translation of ontologies and semantic rules defined in OWL and Jena rules, respectively into Java. It may, however, be appreciated that translation of the semantic models and rules from other ontology languages such as Semantic Application Design Language (SADL) and Rule Interchange Format (RIF) to other object-oriented languages can similarly be achieved.

Accordingly, 202 refers to translating one or more semantic classes defined in OWL into classes in a desired procedural language such as Java. Specifically, the one or more semantic classes representative of specific domain concepts are translated into corresponding Java classes. Further, 204 corresponds to translating each property in the one or more properties to a corresponding field in the procedural class translated from the semantic class that forms the domain of that property with corresponding get and set functions in the desired procedural language. Additionally, as previously noted, a semantic property corresponding to a particular domain class may be functional, or may have cardinality or a maximum cardinality constraint limiting the property to a single instance of a range class or xsd type. In such scenarios, the get function of the field corresponding to the semantic property returns that range class or the xsd type. If the semantic property's range, however, is not as restricted, then the get function returns a collection of instances of the range class or the xsd type. Additionally, one or more OWL namespaces may also be translated into corresponding Java packages, thus maintaining a consistent approach to the issue of the same name appearing in multiple namespaces.

Further, at 206, instances corresponding to the semantic classes are translated into instances of corresponding procedural classes. Next, 208 relates to conversion of the semantic rules into methods of the associated procedural classes by identifying the scope of the rule based on the rule premise and/or conclusion. An example method for converting the semantic rules into methods in the associated Java classes will be described in greater detail with reference to Fig. 3.

Fig. 3 illustrates the flow chart 300 depicting an example method for translating semantic rules into programming code in an object-oriented language such as Java. In particular, the flowchart 300 describes the step 208 of Fig. 2 in greater detail. Accordingly, the example method illustrated in Fig. 3 represents a continuation of the method of Fig. 2. The example method illustrated in Fig. 3, however, may also be independently implemented to translate the semantic rules into programming code in a desired procedural language.

Typically, semantic rules include two parts-a premise and a conclusion. The semantic rule premise or rule body expresses a directed graph pattern that must be matched for the rule to be "fired" or for its conclusions to be drawn. The conclusion or rule head identifies one or more effects, such as insertion of nodes or edges in the directed graph, to be realized for each sub-graph that matches a pattern in the rule body. To that end, nodes or edges in the directed graph pattern of the rule include "unbound" variables that can be used to tie various elements of the rule together. As used herein, unbound variables correspond to variables whose values are not explicitly known, but that can be matched against the directed graph to find one or more bindings that satisfy the directed graph pattern.

By way of example, if a rule premise includes the statement "x = 2 * 3," then "x" is bound to the value "6." However, if a rule premise includes the statement, "x is a Circle," then x is an unbound variable, and typically, it is the task of a rules engine to find all values of x in the directed graph that satisfy the defined condition. Similarly, if the rule premise includes a more constrained statement, for example, "x is a Circle, x has radius y, y < 3," the rules engine is configured to find and bind x to all instances of the class Circle that have radius less than 3 while binding "y" to the corresponding radii. Accordingly, the rule fires for all those bindings of the variables that satisfy all of the rule premise statements.

Further, certain rules engines support the use of functors or "built-ins" in the rule premise and/or conclusion, the functors including snippets of procedural code that may add bindings and succeed or fail (premise) or cause side effects (conclusion) based on the specific implementation scenario. In particular, the present embodiment describes the example method with reference to rules with functors in the premise or in the conclusion when there is at least one triple or statement present in the conclusion of the semantic rule. Specifically, the functors in the semantic rules are translated by including the functor in the desired procedural language and calling the functor from the procedural code generated by the example rule translation method described herein. For discussion purposes, the example method illustrated in Fig. 3 will be described using the following examples of semantic classes and rules:

Semantic Class Description

$$\text{Shape2D is a class,}$$
$$\text{described by area with a single value of type decimal.} \tag{1}$$

$$\text{Circle is a type of Shape2D,}$$
$$\text{described by radius with a single value of type decimal.} \tag{2}$$

$$\text{Rule AreaOfCircle}$$
$$\text{given} \quad \text{x is a Circle}$$
$$\text{then area of x is radius of x\textasciicircum2 * PI.} \tag{3}$$

$$\text{MyCircle is a Circle, has radius 1.0.} \tag{4}$$

Rectangle is a type of Shape2D,

described by height with a single value of type decimal,

described by width with a single value of type decimal.          (5)

Rule AreaOfRectangle

given x is a Rectangle then area of x is height of x * width of x.          (6)

MyRect is a Rectangle, has height 2.0, has width 3.0.          (7)

Here, the semantic model and rules are shown in the Semantic Application Design Language (SADL) representation. SADL is an open source, controlled-English representation that can be translated directly to OWL and Jena Rules. Further, Jena is an open source Semantic Web framework for Java. In particular, Jena provides an API, for example, to extract data from and write to Resource Description Format (RDF) graphs that represent the semantic models. In the examples illustrated herein, however, it may be noted that the namespaces of concepts in the current model are omitted for readability.

Jena Rules Representation

[AreaOfCircle: (?x rdf:type Circle), (?x radius ?v1),

pow(?v1, 2, ?v2), product(?v2, 3.141592653589793, ?v3)

-> (?x area ?v3)] .          (8)

[AreaOfRectangle: (?x rdf:type Rectangle), (?x height ?v1),

(?x width ?v2), product(?v1, ?v2, ?v3)

-> (?x area ?v3)]          (9)

Accordingly, to translate the Jena rules into Java code, at 302, one or more elements in the rule conclusion are evaluated to determine what information is computed by the rule. Typically, the elements of the rule conclusion are represented as one or more "node->edge->node" triples that define the information added to the sematic model when the rule premises are satisfied and the rule "fires." By way of example, on evaluating the conclusions of the two Jena rules (8) and (9) illustrated herein, it is determined that the conclusions include a single triple: "?x area ?v3," indicating that the semantic rule is concerned with the computation of a value of "area."

Further, at 304, for each element in the semantic rule conclusion, one or more variables in each of the triples in the semantic rule conclusion are identified. In particular, the identified variables must also be present in elements of the rule premise to enable the rules engine to infer information, such as, how a value of the variable would be computed and where the procedural code generated in lieu of the semantic rule will be incorporated. In the two Jena rules (8) and (9), for example, "x" and "v3 "are determined as the variables.

Additionally, at 306, the property of each triple for each element in the semantic rule conclusion is determined. Specifically, the property of each triple is used to identify the procedural function in which procedural code generated in lieu of the semantic rule will be incorporated. By way of example, in the Jena rules (8) and (9), "area" is determined to be the property and accordingly, a getArea() function is identified to include Java code generated in lieu of the Jena rules (8) and (9).

At 308, one or more elements in the semantic rule premise that bind one or more subject variables are identified. Here, each of the subject variables corresponds to a subject (first node) of at least one of the triples in the semantic rule conclusion. For example, in rule (8) corresponding to the AreaOfCircle rule, "x" is identified as the subject of the triple "x is a Circle." Similarly, in rule (9) corresponding to the AreaOfRectangle rule, "x" is identified as the subject of the triple "x is a Rectangle."

Further, at 310, it is determined if the triples in the semantic rule premise that include the identified subject variable are "type" statements. Additionally, at 312, the domain of the property of each triple in the semantic rule premise that includes the identified subject variable but is not a "type" statement is determined.

Accordingly, at 314, the procedural function is incorporated within one or more procedural classes translated from the least restrictive semantic classes obtained from an intersection of the classes identified by the premise triples determined to be "type" statements. By way of example, as the triple "(?x rdf:type Circle)" in rule (8) corresponds to a type statement, the getArea() function will be included in the Java class translated from the semantic class "Circle" that appears in the triple. Similarly, for rule (9), the getArea() function will be included in the Java class translated from the semantic class "Rectangle" that appears in the corresponding triple "?x rdf:type Rectangle."

In certain embodiments, however, the procedural function is alternatively or additionally incorporated within certain other procedural classes. These procedural classes are translated from the least restrictive semantic classes obtained from an intersection of the classes identified as the domain of the property of each triple in the semantic rule premise and/or conclusion that includes the identified subject variable but is not a "type" statement.

By way of example, the elements of the triple "?x radius ?v1" for the rule (8) identifies the class of "x" as "Circle because "Circle" is the domain of the property "radius." In rule (9), the triples "?x height ?v1" and "?x width ?v2 both indicate that "Rectangle" is the class in which to place the "getArea()" get function as "Rectangle," is the domain of both "height" and "width." In the present technique, thus, if more than one class is identified as the type of a subject variable in the rule conclusion, the get function is associated with each of the identified classes.

At 316, a computation performed by the semantic rule based on one or more elements in the semantic rule premise that compute a value of one or more object variables in the triples in the semantic rule conclusion is determined. Particularly, the semantic rule premise elements corresponding to the object variables provide information for computing one or more values to be returned by the get functions incorporated in the identified procedural classes.

Accordingly, at 318, the procedural function is updated with procedural code generated in lieu of the determined computation in associated procedural classes. By way of example, in rule (8), the triples "pow(?v1, 2, ?v2)," "product(?v2, 3.141592653589793, ?v3)" and "(?x area ?v3)" including the object variables "v1", "v2" and "v3" represent the computation to be included in the getArea () function of the Java class "Circle". The updated getArea () function, thus, will return the value of "v3" as the computed area in response to a procedural code call in the translated object-oriented application.

In certain implementations, the directed graph pattern defined by the elements of the rule premise can be more complex than in the examples illustrated herein. In such a scenario, a variable's binding may be obtained by traversing one or more edges of the directed graph representative of the semantic model. More particularly, the get functions in the translated Java classes can be used to traverse the directed graph in the translated instance data to obtain the variable bindings. Accordingly, the present technique allows a substantially complete translation of the semantic models and rules into Java code to facilitate easy discovery, use and manipulation of the available semantic information.

At least a portion of an example Java code representation of the methods generated from the rules (8) and (9) illustrated in the Jena rules representation using the present technique is illustrated herein.

Java code representation generated from semantic models and rules

```
public class Circle extends Shape {
private float radius;
public void setRadius(float _radius) {
        radius = _radius;
}
public float getRadius() {
return radius;
}
public float getArea() { // overrides simple getter in Shape class;
                // implements rule AreaOfCircle
        return (getRadius() ^ 2 * 3.14159);
}
}                                                           (10)
```

```
public class Rectangle extends Shape { private float height;

        private float width;

        public void setHeight(float _height) {

                height = _height;

        }

        public float getHeight() {

                return height;

        }

        public void setWidth(float _width) {

                width = _width;

        }

        public float getWidth() {

                return width;

        }

        public float getArea() { // overrides simple getter in Shape class;
                                 // implements rule AreaOfRectangle

                return (getHeight() * getWidth());

        }

}                                                                    (11)
```

The systems and methods described hereinabove, thus, provide an efficient technique for translating not only the semantic models and but also the semantic rules into procedural code. The Java code shown in (10) and (11), for example, illustrate the getArea() functions that embody the processing performed by the Jena rules (8) and (9) illustrated herein. Particularly, the disclosed techniques allows generation of object oriented applications for use in scenarios where delivery of models as working applications does not permit the use of a rule engine in the delivered application. Further, the translation of semantic models with rules into a procedural language such as Java allows applications to be reduced to machine executables that can be easily used for various kinds of traditional validation and testing resulting in ease of use of the captured information. Additionally, the translated Java application, for example, allows for faster execution times, easier system validation and reduced memory requirements, thus improving overall system performance.

Although the example embodiments of the present technique are described with reference to translation of semantic models and rules in OWL into programming code in Java, use of the disclosed technique with other suitable object-oriented programming languages is also contemplated.

Furthermore, the foregoing examples, demonstrations, and process steps such as those that may be performed by the inference unit 110 and code generator 112 may be implemented by suitable code on a processor-based system, such as a general-purpose or special-purpose computer. It should also be noted that different implementations of the present technique may perform some or all of the steps described herein in different orders or substantially concurrently, that is, in parallel. Furthermore, the functions may be implemented in a variety of programming languages, including but not limited to Python, C++ or Java. Such code may be stored or adapted for storage on one or more tangible, machine readable media, such as on data repository chips, local or remote hard disks, optical disks (that is, CDs or DVDs), or other media, which may be accessed by a processor-based system to execute the stored code.

While only certain features of the present invention have been illustrated and described herein, many modifications and changes will occur to those skilled in the art. It is, therefore, to be understood that the appended claims are intended to cover all such modifications and changes as fall within the scope of the invention as defined therein.

**Claims**

1. A method for translating semantic models and rules into procedural code in a desired procedural language, comprising:

    evaluating (302) a conclusion of a semantic rule to determine information computed by the semantic rule, wherein one or more elements in the semantic rule conclusion comprise one or more triples;
    identifying (304) one or more variables in each of the one or more triples for each of the one or more elements in the semantic rule conclusion, wherein the one or more variables are also present in a premise of the semantic rule;
    determining (306) a property of each triple in the one or more triples for each of the one or more elements in the semantic rule conclusion for identifying a procedural function where procedural code generated in lieu of the semantic rule will be incorporated;
    identifying (308) one or more elements in the semantic rule premise that bind one or more subject variables in the one or more variables, wherein each of the one or more subject variables is a subject of at least one of the one or more triples in the semantic rule conclusion;
    determining (310) whether one or more triples in the semantic rule premise comprising one or more of the identified subject variables are "type" statements;
    determining (312) the domain of the property of each of the one or more triples in the semantic rule premise, the semantic rule conclusion, or a combination thereof, that comprise one or more of the identified subject variables and are not "type" statements;
    associating (314) the procedural function with one or more procedural classes translated from one or more semantic classes obtained from an intersection of the classes identified by the triples determined to be "type" statements and the classes identified as the domain of the triples that comprise the identified subject variables in the semantic rule premise, the semantic rule conclusion, or a combination thereof, and are not "type" statements;
    determining (316) a computation performed by the semantic rule based on one or more elements in the semantic rule premise that compute a value of one or more object variables in the one or more variables, wherein the each of the one or more object variables is an object of at least one of the one or more triples in the semantic rule conclusion; and
    updating (318) the procedural function in associated procedural classes with procedural code generated in lieu of the determined computation to return the computed value.

2. The method of claim 1, further comprising:

    translating (202) one or more semantic classes into corresponding classes in a desired procedural language;
    translating (204) one or more properties associated with the semantic classes into fields of corresponding procedural classes; and
    translating (206) instances associated with the semantic classes into instances of corresponding procedural classes.

3. The method of claim 2, further comprising using the procedural function to process the translated instances of the procedural classes for determining bindings between the one or more variables in the one or more triples in the semantic rule conclusion and the one or more elements in the semantic rule premise.

4. The method of claim 1, 2 or 3, wherein the one or more triples defme at least a portion of the sematic model and rules in a mathematical directed graph representation, the directed graph comprising semantic class descriptions and the instances associated with the semantic classes as nodes, and the properties associated with the semantic classes as edges of the directed graph representation.

5. A non-transitory computer readable storage medium with an executable program thereon for generating procedural code in a desired computer programming language from semantic models and rules, wherein the program instructs a processing unit (104) to perform the method of any one of claims 1 to 4.

**6.** A system for generating procedural code in a desired computer programming language from semantic models and rules, comprising:

a repository (108) comprising one or more semantic classes, one or more properties corresponding to the semantic classes, one or more instances of the semantic classes, one or more rules corresponding to the semantic classes, or combinations thereof;
a processing unit (104) coupled to the repository (108), wherein the processing unit (104) is configured to:

translate one or more semantic classes into classes in a desired procedural language;
translate one or more properties corresponding to the semantic classes into fields of corresponding procedural classes;
translate instances corresponding to the semantic classes into instances of corresponding procedural classes;
evaluate a conclusion of a semantic rule to determine information computed by the semantic rule, wherein one or more elements in the semantic rule conclusion comprise one or more triples;
identify one or more variables in each of the one or more triples for each of the one or more elements in the semantic rule conclusion, wherein the one or more variables are also present in a premise of the semantic rule,
determine a property of each triple in the one or more triples for each of the one or more elements in the semantic rule conclusion for identifying a procedural function where procedural code generated in lieu of the semantic rule will be incorporated;
identify one or more elements in the semantic rule premise that bind one or more subject variables in the one or more variables, wherein each of the one or more subject variables is a subject of at least one of the one or more triples in the semantic rule conclusion;
determine whether one or more triples in the semantic rule premise comprising one or more of the identified subject variables are "type" statements;
determine the domain of the property of each of the one or more triples in the semantic rule premise, the semantic rule conclusion, or a combination thereof, that comprise one or more of the identified subject variables and are not "type" statements;
associate the procedural function with one or more procedural classes translated from one or more semantic classes obtained from an intersection of the classes identified by the triples determined to be "type" statements and the classes identified as the domain of the triples that comprise the identified subject variables in the semantic rule premise, the semantic rule conclusion, or a combination thereof, and are not "type" statements;
determine a computation performed by the semantic rule based on one or more elements in the semantic rule premise that compute a value of one or more object variables in the one or more variables, wherein the each of the one or more object variables is an object of at least one of the one or more triples in the semantic rule conclusion; and
update the procedural function in associated procedural classes with procedural code generated in lieu of the determined computation to return the computed value.

**7.** The system of claim 6, further comprising one or more input devices (106), one or more output devices (106), or combinations thereof, to allow a user to configure translation of the semantic classes, the properties, the instances, the semantic rules, or combinations thereof, to the desired procedural language.

**8.** The system of claim 6 or claim 7, wherein the processing unit (104) is further configured to generate an executable application corresponding to the semantic classes, the properties, the instances, the semantic rules, or combinations thereof, in the desired procedural language.

**9.** A method for translating semantic models and rules into procedural code in a desired procedural language, the method comprising:

translating (202) one or more semantic classes into classes in a desired procedural language;
translating (204) one or more properties corresponding to the semantic classes into fields of corresponding procedural classes;
translating (206) instances corresponding to the semantic classes into instances of corresponding procedural classes;
evaluating (302) a conclusion of a semantic rule to determine information computed by the semantic rule, wherein one or more elements in the semantic rule conclusion comprise one or more triples;

identifying (304) one or more variables in each of the one or more triples for each of the one or more elements in the semantic rule conclusion, wherein the one or more variables are also present in a premise of the semantic rule;

determining (300) a property of each triple in the one or more triples for each of the one or more elements in the semantic rule conclusion for identifying a procedural function where procedural code generated in lieu of the semantic rule will be incorporated;

identifying (308) one or more elements in the semantic rule premise that bind one or more subject variables in the one or more variables, wherein each of the one or more subject variables is a subject of at least one of the one or more triples in the semantic rule conclusion;

determining (310) whether one or more triples in the semantic rule premise comprising one or more of the identified subject variables are "type" statements;

determining (312) the domain of the property of each of the one or more triples in the semantic rule premise, the semantic rule conclusion, or a combination thereof, that comprise one or more of the identified subject variables and are not "type" statements;

associating (314) the procedural function with one or more procedural classes translated from one or more semantic classes obtained from an intersection of the classes identified by the triples determined to be "type" statements and the classes identified as the domain of the triples that comprise the identified subject variables in the semantic rule premise, the semantic rule conclusion, or a combination thereof, and are not "type" statements;

determining (316) a computation performed by the semantic rule based on one or more elements in the semantic rule premise that compute a value of one or more object variables in the one or more variables, wherein the each of the one or more object variables is an object of at least one of the one or more triples in the semantic rule conclusion; and

updating (318) the procedural function in associated procedural classes with procedural code generated in lieu of the determined computation to return the computed value.

10. The method of claim 9, further comprising generating an executable application corresponding to the semantic classes, the properties, the instances, the semantic rules, or combinations thereof, in the desired procedural language.

_~100_

108

Data Repository

114 — Class Descriptions

116 — Properties

118 — Instance Data

120 — Rules Data

Input/Output Unit _~106_

Processing Unit _~104_

Inference Unit _~110_

Code generator _~112_

Application _~102_

## FIG. 1

_~200_

Translate one or more semantic classes into classes in a desired procedural language _~202_

Translate one or more properties corresponding to the semantic classes into fields of corresponding procedural classes _~204_

Translate instances corresponding to the semantic classes into instances of corresponding procedural classes _~206_

Translate semantic rules into procedural code in the desired procedural language by identifying the scope of the rule based on the rule premise and/or the rule conclusion _~208_

## FIG. 2

300

Evaluate a conclusion of a semantic rule to determine information computed by the semantic rule, where conclusion elements include one or more triples ~302

Identify one or more variables in each of the triples for each of the one or more elements in the semantic rule conclusion, where the one or more variables are also present in a premise of the semantic rule ~304

Determine a property of each triple in the one or more triples for each of the one or more elements in the semantic rule conclusion for identifying a procedural function where procedural code generated in lieu of the semantic rule will be incorporated ~306

Identify one or more elements in the semantic rule premise that bind one or more subject variables in the one or more variables, where each of the subject variables is a subject of at least one of the one or more triples in the semantic rule conclusion ~308

Determine whether one or more triples in the semantic rule premise comprising the identified subject variables are "type" statements ~310

Determine the domain of the property of each of the one or more triples in the semantic rule premise and/or the sematic rule conclusion that bind the identified subject variables when one or more of the triples in the semantic rule premise comprising the identified subject variables are not "type" statements ~312

Associate the procedural function with procedural classes translated from semantic classes obtained from an intersection of classes identified by the triples determined to be "type" statements and classes identified as the domain of the triples that comprise the identified subject variables in the semantic rule premise and/or the semantic rule conclusion and are not "type" statements ~314

Determine a computation performed by the semantic rule based on one or more elements in the semantic rule premise that compute a value of one or more object variables ~316

Update the procedural function in associated procedural classes with procedural code generated in lieu of the determined computation to return the computed value ~318

FIG. 3

Europäisches
Patentamt

European
Patent Office

Office européen
des brevets

## EUROPEAN SEARCH REPORT

Application Number

EP 12 16 5642

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EBERHART A: "OntoJava - Applying Mainstream Technology to the Semantic Web", WORKSHOP ON SEMANTIC WEB-BASED E-COMMERCE AND RULES MARKUPLANGUAGES, 2 November 2001 (2001-11-02), pages 1-18, XP002289922, * pages 6-14 * | 1-10 | INV. G06F9/44 |
| A | Kalyanpur A et al: "Automatic Mapping of OWL Ontologies into Java", Proceedings of Sixteenth International Conference on Software Engineering and Knowledge Engineering (SEKE) Internet citation, June 2004 (2004-06), XP002679950, Retrieved from the Internet: URL:http://www.mindswap.org/~aditkal/SEKE04.pdf [retrieved on 2012-07-05] * abstract * * page 1, left-hand column, paragraph 2 - page 2, right-hand column, paragraph 1 * | 1-10 | |
| A | Giurca: "JenaRules", Internet citation, 21 April 2008 (2008-04-21), pages 1-7, XP002679951, Retrieved from the Internet: URL:http://hydrogen.informatik.tu-cottbus.de/wiki/index.php?title=JenaRules&oldid=1637 [retrieved on 2012-07-16] * pages 1-3 * | 1-10 | TECHNICAL FIELDS SEARCHED (IPC) G06F |

The present search report has been drawn up for all claims

| Place of search | Date of completion of the search | Examiner |
|---|---|---|
| The Hague | 16 July 2012 | de Man, Ronald |